# EUROPEAN PATENT APPLICATION

(11) **EP 2 899 852 A1**
(43) Date of publication of application: **29.07.2015**
(21) Application number: 14152351.4
(22) Date of filing: 23.01.2014
(51) Int. Cl.: H02K 3/14, B23K 3/047, H02K 15/06

(54) **Method for brazing rotor windings**

(71) Applicant: ALSTOM Technology Ltd, 5400 Baden (CH)
(72) Inventor: Parry, Stewart, Stafford ST16 1AE (GB); Visintin, Massimiliano, 8002 Zürich (CH); Greensill, Mathew, Stafford ST17 9XQ (GB); Weidemann, Kornelia, 79713 Bad Säckingen (DE); Glover, Paul Dominic, Stafford ST17 4TH (GB)
(74) Representative: Alstom Technology Ltd

(57) **Abstract**

The present disclosure relates to a method for manufacturing the windings of an rotating electric generator. Joining copper half coils (1,2) to a winding of such a generator rotor is usually accomplished by a brazing process, wherein each single conductor to be joined is heated on its own to the brazing temperature after the brazing material is carefully positioned in the joint area, located at the half coil end portions. This conventional method requires a long time for an entire rotor, which results in high production costs. The object of the present invention is to provide a method for joining of conductors of rotating electrical machines which is faster and reduces negative effects of the heating, which is impacting adjacent portions, to a minimum. This object is realised by means of a brazing element (4) which is positioned over the ends of half coil stacks (1A,2A) to be joined.

## Description

### FIELD OF THE INVENTION

The present disclosure relates to a method for manufacturing the windings of rotors for use in rotating electrical machines. In particular, the method can be applied both in workshops and directly on-site.

### BACKGROUND

State-of-the-art electrical energy conversion relies on a three-phase power network with alternating currents (AC) at 50Hz or 60Hz frequency and a voltage levels ranging from several hundreds of Volts to hundreds of thousands of Volts. The conversion of rotating mechanical energy into electric energy and vice versa is done by generators and by motors, respectively. Those rotating machines can be divided into asynchronous and synchronous apparatuses. Motors and generators comprise a stator and a rotor. The rotor of the machine rotates inside the stator bore of the stator. Rotating machines generate the magnetic field typically through rotor pole windings. The number of rotor poles and the number revolutions per minutes (rpm) of the rotator define the frequency of the stator magnetic field. The electrical resistance of the winding of a rotor leads to resistive losses therein.

Rotors are generally manufactured with a number of coils, each embedded to its respective slot arranged in the rotor body. In particular, each coil comes in the form of a stack of conductors called turns, generally made of copper.

Each winding is made of coils, each extending parallel to the rotor axis along the rotor body. Each half coil has at its axial ends, two diametrically opposed radius portions, each one joined with the respective radius portion of the opposed half coil, thus forming a complete rotor coil with all coils making up the rotor winding.

The joining of the copper rotor turns is accomplished by a brazing process, wherein the turns to be joined, located at both ends of the coil, are individually heated to braze temperature after the brazing alloy is positioned in the joint area.

Such brazing process must be applied in sequence to each pair of turns within the coil stacks being brazed together. Generally speaking, a wound rotor comprises four to eight coils for each pole. For a rotor having two poles, there will be up to sixteen coils. Each coil is made up of pairs of opposed half coils joined together at each end of the coil. Each half coil is made up of a stack usually comprising of up to twelve turns. Therefore, for each coil, the conventional brazing operation will have to be performed twenty four times (twelve at each end of each coil). So, for a sixteen coil winding, the brazing process will be carried out in sequence for approximately four hundred times.

It will be appreciated that such process will generally require a long time to be carried out, which results in high production costs.

After each coil is brazed, the individual pairs of turns have to be NDT tested (Non Destructive Testing). This is performed on the joint area to insure the adhesion quality of the braze. Subsequently, as well known, the joint area needs to be electrically insulated. So, after the quality check, a layer of electrical insulation is positioned on the brazed area. Since standard electrical insulation does not resist the brazing cycle, the insulation cannot be inserted prior to the brazing.

All the above operations are repeated for the next single turn of the coil with the insulation material then being added to the turn brazed previously.

The present disclosure is oriented towards providing the method needed to overcome the difficulties associated with a long labour intensive process.

### SUMMARY OF THE INVENTION

The object of the present invention is to provide a method for brazing copper turns of rotor coils in the manufacture of rotating electrical plant rotors, which is fast and minimises possible negative effects on adjacent portions of the rotor, including already brazed portions or portions yet to be brazed.

According to preferred embodiments, this object is realized by means of a brazing element which is positioned, as it will be described in the following description of some exemplary embodiments, at one side of the coil stacks to be brazed.

According to the invention, brazing of all the copper turns in the coil stack is carried out by means of a uniform and simultaneous heating of all turns in the coils, within a limited time of up to six minutes, which cannot be provided by the conventional brazing process by locally heating the turns being brazed from the top surface.

In addition, when brazing a coil stack more heat is generated compared to brazing single turns. For such reason, according to preferred embodiments, the present invention ensures that rotor material, adjacent to the brazing area, is unaffected by excess temperatures.

Also, the invention according to the preferred embodiments provides an innovative methodology for performing NDT tests. In fact, conventional coil brazing enables testing from the top surface of each single turn to check bonding quality. Conversely, with the proposed method there is only limited space of approximately 0.5 mm between brazed turns, which is too small to fit a conventional Ultrasonic probe or to apply and remove coupling gel after UT inspection.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:
Figure 1 is a perspective view of a rotor during winding;
Photo 2 and 2a are perspective views of a partially wound rotor where the copper coils are being brazed according to the conventional method (resistance brazing);
Figures 3 shows a schematic front view of a coil stack being brazed according to the present invention;
Figure 4 shows a perspective view of a ram applying compressive force to the coil stack;
Figure 5 shows a perspective view of a brazing element according to the present invention;
Figures 6 and 9 show various aspects of the method according to the present invention; and
Figures 7 and 8 respectively show a block diagram and a graph related to the method according to the present invention.

### DETAILED DESCRIPTION OF THE DRAWINGS

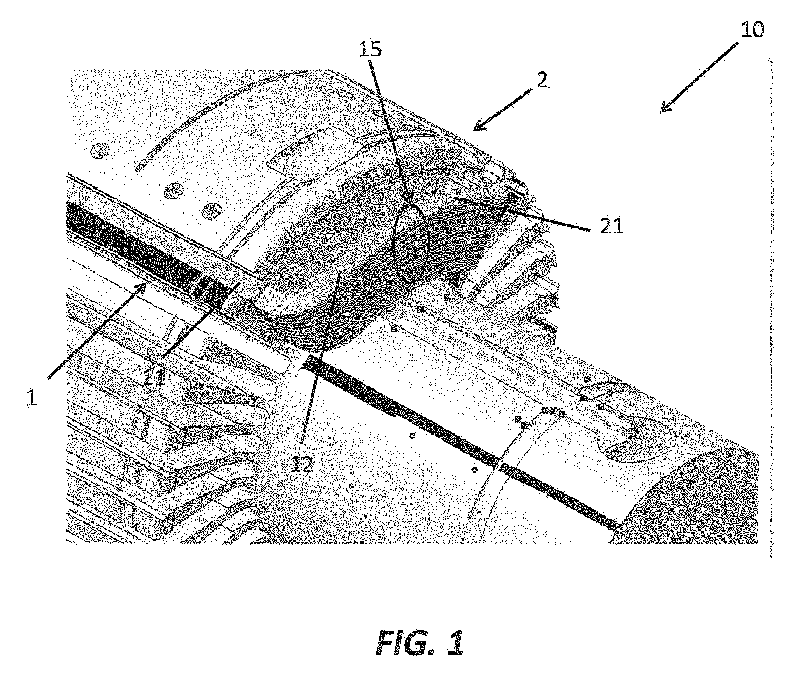

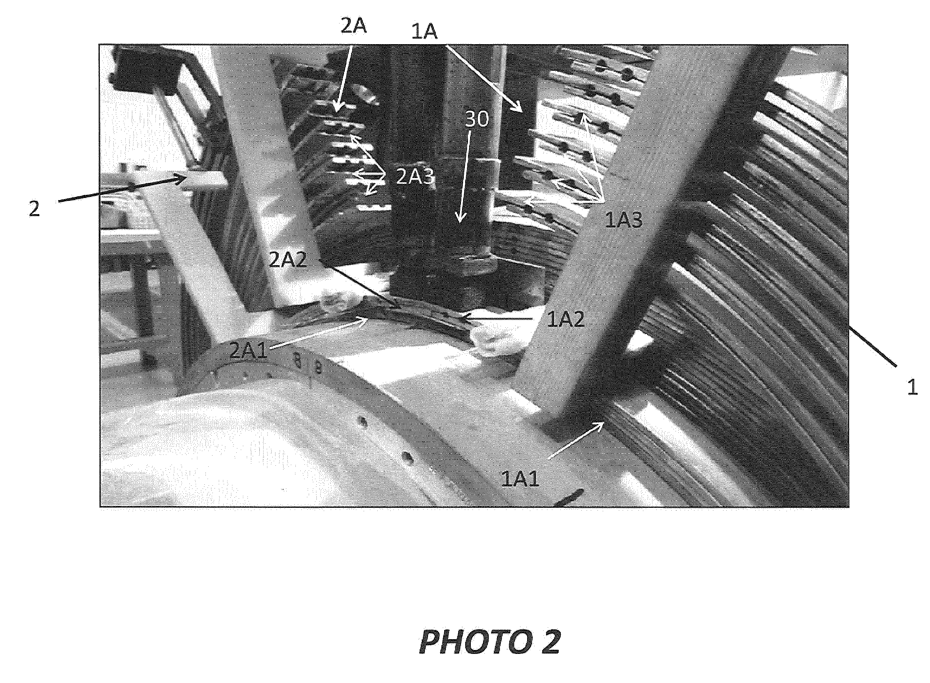

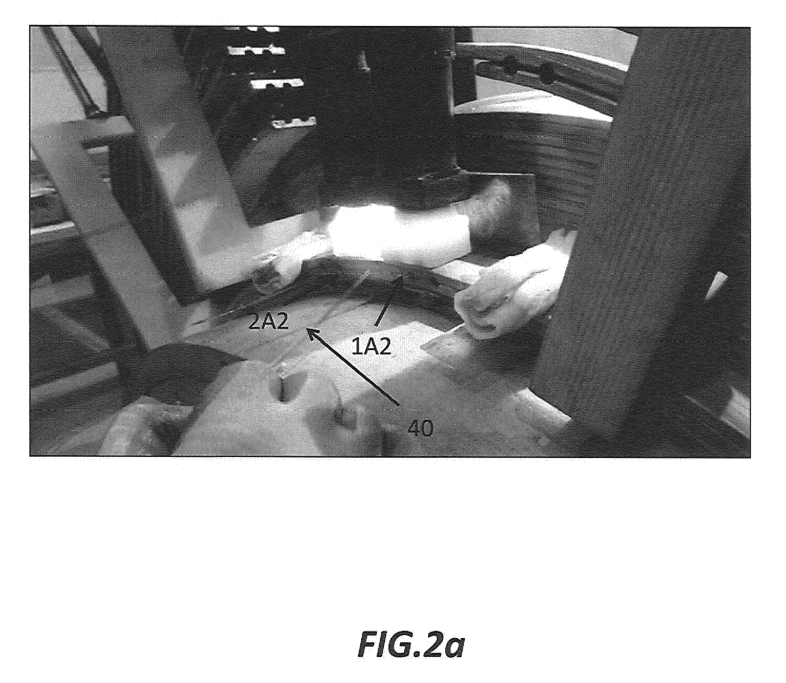

With reference to figure 1, a rotor assembly of an electrical machine is shown, generally indicated with the reference number 10. The rotor assembly 10 comprises a plurality of turns, each one embedded in a respective slot. As a way of example, reference will be made to a couple of half coils indicated in the figure with numerals 1 and 2, but it will be appreciated that the same description will apply to all coils forming the rotor assembly 10.

As shown, the half coil 1 is substantially C-shaped and comprises a main portion 11 running alongside the rotor axis, and two radiused coil end portions (of which only radius coil end portion 12 is visible in the figure). Similarly, the half coil 2 is C-shaped and comprises a main portion disposed alongside the rotor axis (not visible in the figure) and two radiused end portions at its axial ends (of which only radius end portion 21 is visible in the figure).

The half coils 1 and 2 are then joined at their ends in correspondence of a brazing area generally disposed along an axial plane of symmetry of the rotor assembly 10 forming one coil. In the figure, only brazing area 15 is visible.

Photos 2 and 2a show a method of joining half coils according to the prior art. Photo 2 shows that conductive coils comprise a plurality of turns, generally made of copper, stacked together. In particular, half coil 1 comprises stacked turns 1A, while half coil 2 comprises stacked turns 2A. Each turn of the stack 1A of half coil 1 is then brazed to the corresponding turn of stack 2A of half coil 2. For instance, with reference to photo 2, turns 1A1 and 2A1 are already brazed, while turns 1A2 and 2A2 are currently subject to the brazing process. Generally, this conventional process is carried out by means of a resistance brazing means 30, configured to heat the brazing area, on top of the single turns to be brazed. The necessary brazing temperature (which is around 600 - 700 C) is reached by resistance heating while applying a load on top of the coil stack during brazing. As clearly visible, turns generally indicated with reference 1A3 of half coil 1 and 2A3 of half coil 2 have not yet been joined.

The process, according the conventional method, envisages the brazing in sequence of all the single turns belonging to half coils 1 and 2. To manufacture a rotor winding by means of half coils 1 and 2, the process shown in photo 2 has also to be repeated at the other axial end of the rotor assembly. Photo 2a shows the process of brazing single turns 1A2 and 2A2 with the usage of an additional filler material 40.

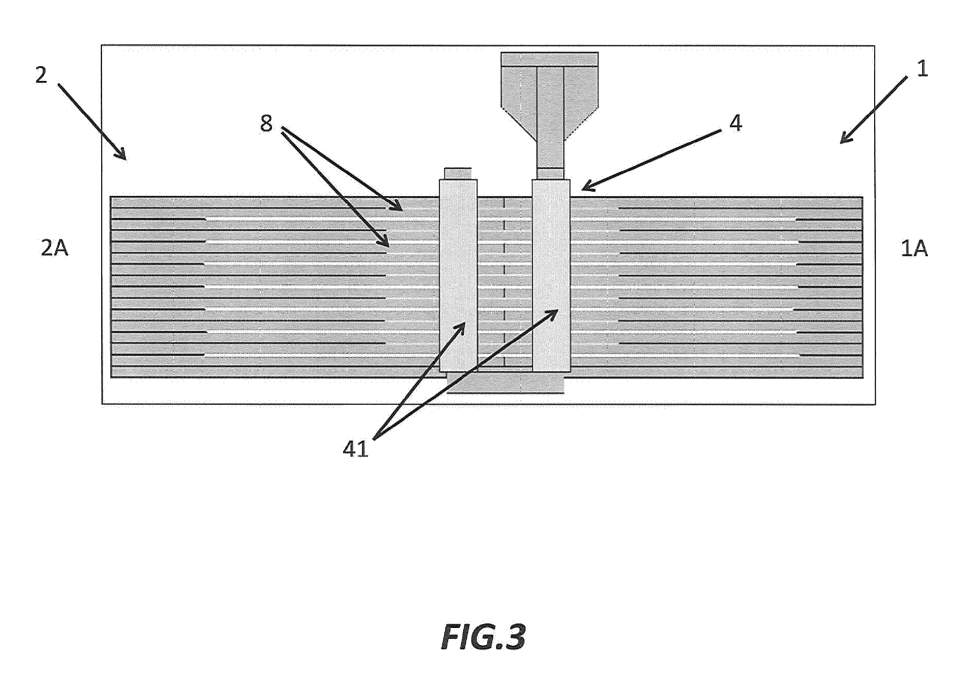

Figure 3 shows a method of brazing stacked turns 1A and 2A in a front view on a plane which is perpendicular to the axis of the rotor assembly, respectively of coil end portions of half coils 1 and 2, according to the present invention.

Differently from the conventional method, the brazing process is operated no longer on the single turns heating from the top, but on the stack of turns 1A and 2B by means of a brazing element 4 positioned at one side of the respective half coils 1 and 2.

The brazing element may heat the stacked coils to be joined by means of different modalities, such as resistance heating or induction heating, however different heating methods may be used as well.

Preferably the brazing element, in the preferred embodiment here disclosed as a non-limiting case, is an induction coil 4, comprising a vertical limb 41, disposed on at one side of the half coil stacks 1A and 2A. The induction coil might comprise a single vertical bar or may be U-shaped, therefore comprising a couple of induction limbs (example shown in the figure).

The induction brazing process utilizes an alloy sheet material having a lower melting point with respect to the materials to braze using induction heating, which exploits the heating effect of electromagnetic fields generated from alternating current flowing through an induction coil. Generally, as induction brazing is a well-known process to those skilled in the art, it won't be disclosed further. The alternating current flowing within the vertical limbs 41 of the brazing coil 4 induces heat in the local area of the half coil stacks 1A and 2A to be joined, establishing the brazing of each of the turns of the stack 1A to the correspondent turns of consecutive stack 2A, instead of performing the brazing separately on each pair of single turns.

In this way it is possible to achieve a uniform and simultaneous heating of all turns of the stack within a very limited time if compared to the time required to carry out the process with the above described conventional method, so that the brazing of all turns of the coils takes place.

Advantageously, prior to the brazing, metallic spacers 8 are inserted between single turns of each coil stacks 1A, 2A. Spacers 8 are preferably made of steel and have a thickness of 0.5 mm.

As the steel is a material permeable for the magnetic field, the magnetic field is enhanced uniformly throughout the coil stack thus improving a homogeneous heating of the entire coil stack.

After the half coil stack 1A has been brazed to half coil stack 2A, metallic spacers 8 are removed from the bars and replaced with electrically insulating material (step not shown).

Alternatively, the method according to the invention may comprise a step of inserting un-impregnated insulation elements between single turns of each half coil stack (1A, 2A) prior to brazing, and then, after the brazing, a later step of applying resin laterally to the un-impregnated insulation elements until the resin is absorbed to prevent it from migrating out during operation. In addition or alternatively high temperature resistant insulations of each turn may be implemented.

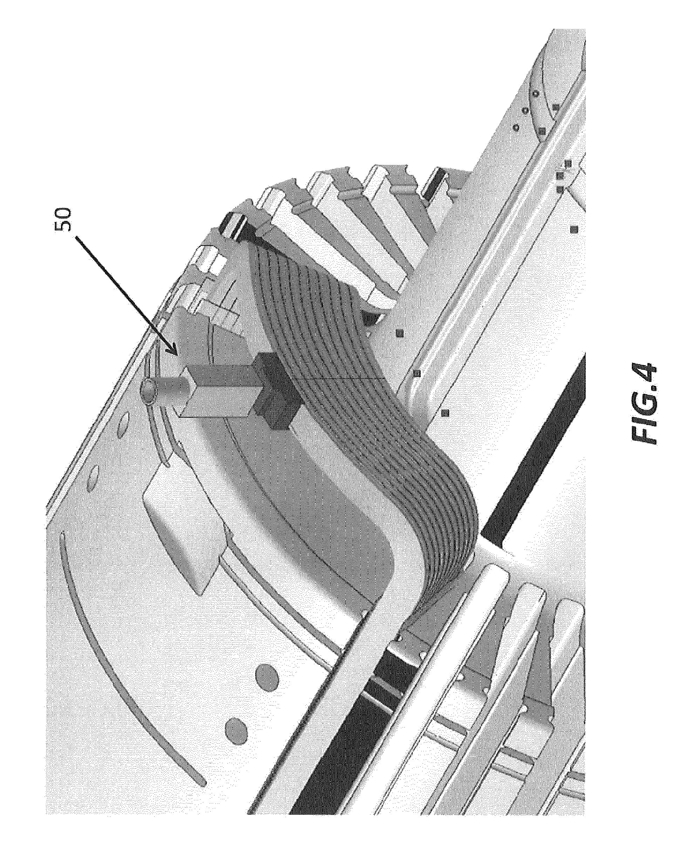

As shown in the next figure 4, during brazing a load is applied to the top of the coil stack at the junction area, in order to ensure pressure on the conductive coils during brazing. In the example of figure 4, the load applied is constant over time. In particular, such load is achieved by an assembly generally indicated in the figure with the reference 50, in a front view. The assembly comprises a vertical ram which applies a constant force to the top of the coil stack (as shown in figure 4). The load may be approximately equal to 6kN but is dependent on physical properties of the coil stack, including but not limited to, strap thickness, overall stack height and coil radius.

Preferably, the force can be applied with a load of an elastic type. Advantageously, the assembly exerting the load may comprise a resilient element configured such that the load may vary depending on the level of expansion of the stacks during the brazing.

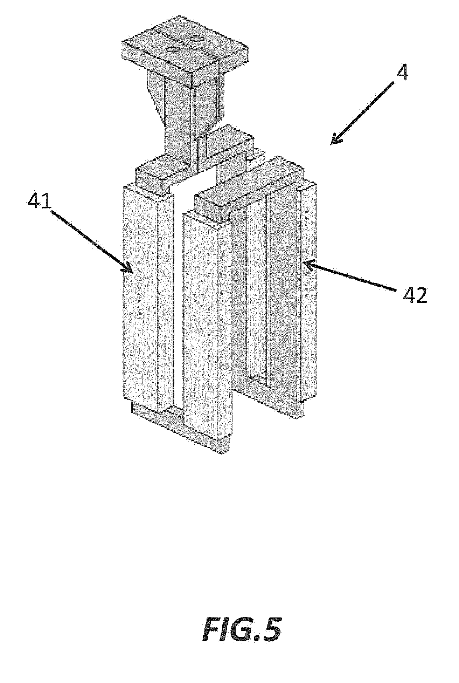

Figure 5 shows an example of a brazing element 4, according to a preferred embodiment. Brazing element 4 comprises a first brazing member 41 and a second brazing member 42. In particular, brazing members 41 and 42 are u-shaped induction coils. The first and second brazing members define a gap there between where the stacked coils to be joined are inserted. According to a preferred embodiment, the brazing element 4 comprises the first member at one side of the stacked half coil and a second brazing member positioned at a second side of the stacked half coil, opposite to the first side. This way, the provision of induction coils on both sides of the stacks enhances even further the homogeneous heating of the coil during the brazing, thus improving the performance of the overall process.

Moreover, the brazing element 4 may include field concentrators, preferably made from magnetic steel, which direct the induction field towards the coil stack between the members 41, 42 during brazing.

During the brazing, is preferable to prevent heating above 100°C of the adjacent coils next to the brazing area, which is at least 12 mm away from it. For this reason, it is important to provide suitable shielding by means of thermally retardant sheet. Cooling of the conductive coils during the brazing can be carried out using several processes. According to preferred embodiments, cooling might be achieved by blowing cold air or gas with a minimum pressure of 1bar onto or within ventilation ducts of a coil stack. This might be performed in addition to conventional local cooling methods.

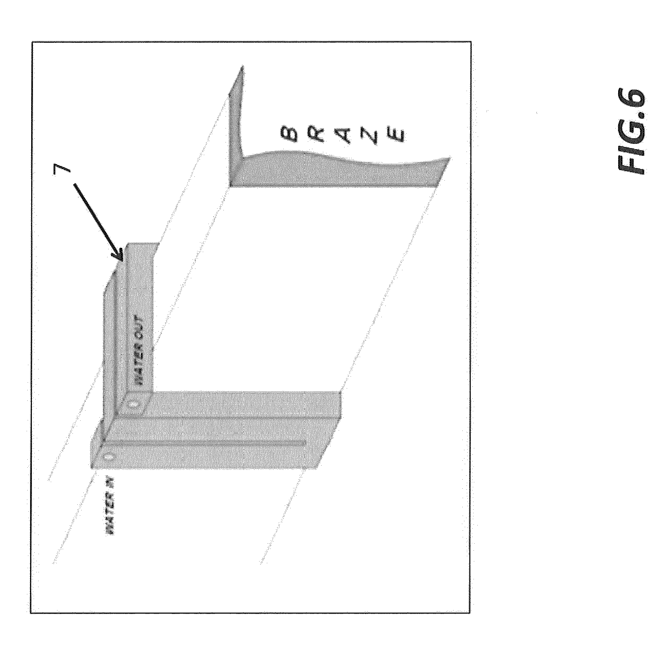

In addition or alternatively, with reference to figure 6, cooling can be carried out by specifically designed heating exchangers configured as cooling jackets 7. Preferably water might be used in the cooling jacket 7 in order to absorb heat from the bar being brazed.

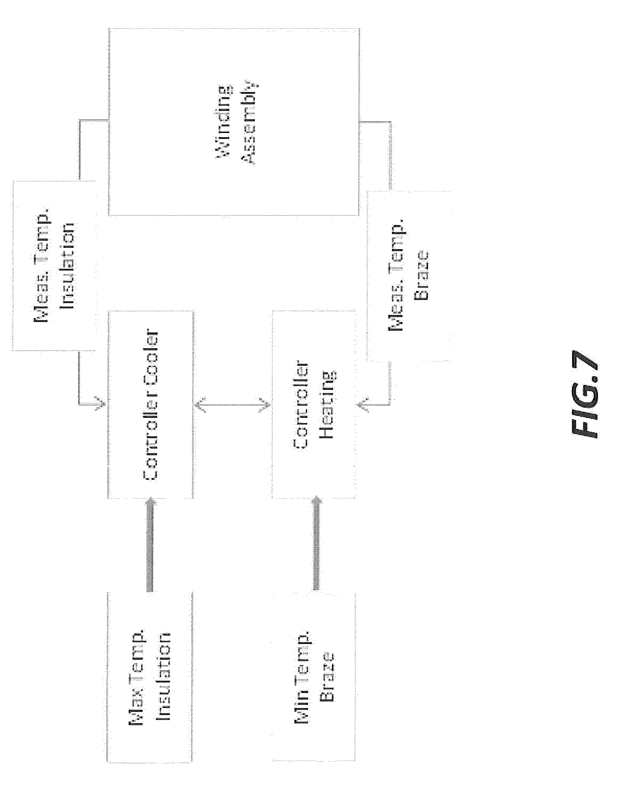

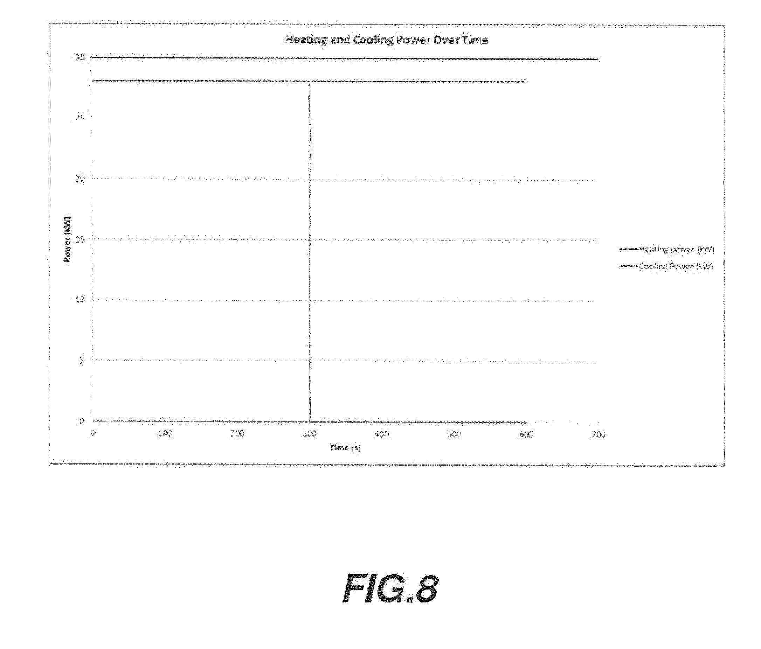

With reference to the following figures 7 and 8, preferred ways to regulate the cooling of adjacent portions of the brazing area, and the heating provided to the brazing area during the brazing process, are shown.

As shown by block diagram of figure 7, the temperature of portions of the bars to be insulated and the temperature of the braze area may be constantly measured from the winding assembly, in particular by the use of thermocouples. On the basis of such measurements, maximum and minimum temperatures admissible respectively for adjacent portions of the bars and for the braze area are monitored accordingly.

With reference to the graph of figure 8, several tests have shown that best performances are obtainable when the brazing element is supplied with a heating current having an associated power input which is constant over time. Accordingly, power input for heating is preferably constant, and power will be stopped when the brazing area reaches a predefined temperature. Advantageously, as shown in the graph, the cooling system is activated at the same instance that the brazing power is stopped.

Alternatively, the power might also be pulsed on and off as opposed to applying it constantly. This variation can be used in the event of uneven heating over the brazing area, and allows the heat to dissipate evenly throughout the coil stack.

According to another aspect of the invention, to prevent the previously brazed coil stack from heating and potentially de-brazing, mica sheet might be used to shield the adjacent coil stack from the brazing area.

After the brazing has been established, as mentioned above, NDT tests (Non Destructive Tests) need to be performed.

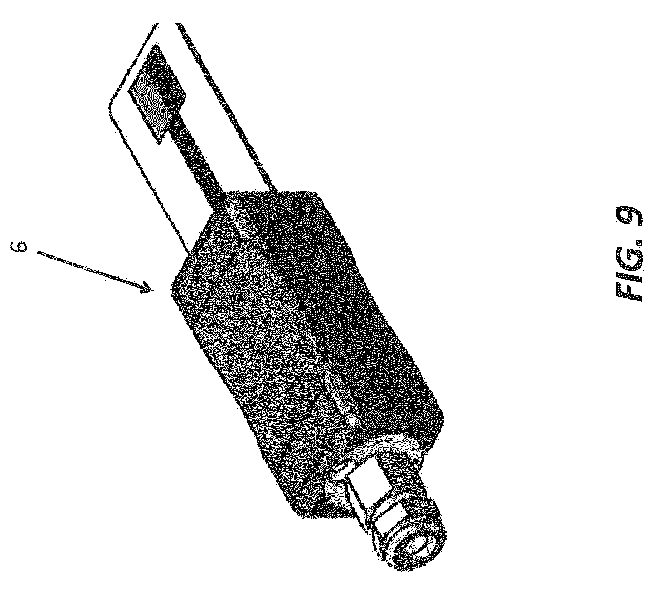

As shown in last figure 9, such test is carried out utilizing a micro scale phased array sensor 6 between single turns of the brazed stack. Such sensor, known to those skilled in the art, may use a 0.5 mm thin probe with a high frequency (for example 20 - 250 MHz) ultrasonic transducer. Advantageously, such test can be easily performed after the entire coil stack of turns of consecutive bars have been brazed, inserting the sensor between single brazed coils in sequence. No coupling gel is generally required for this type of sensor as no residues are generated between the coils. Alternatively different sensors to perform the NDT can be used as well.

Although the present invention has been fully described in connection with preferred embodiments, it is evident that modifications may be introduced within the scope thereof, not considering the application to be limited by these embodiments, but by the content of the following claims.

## Claims

1. Method for winding a rotor assembly (10) of an electrical machine, the rotor assembly (10) comprising one or more conductive half coils (1, 2) each half coil (1, 2) comprising a plurality of stacked turns (1A, 2A), the method comprising joining two consecutive conductive half coils (1, 2) by brazing and being ***characterized in that*** said brazing is operated on said stacked half coils (1A, 2A) by means of a brazing element (4) positioned at least at one side of the half coils (1, 2) to be joined.

2. Method for winding a rotor assembly (10) according to the preceding claim, wherein said brazing element (4) comprises a first brazing member (41) positioned at a first side of the half coils (1, 2) and a second brazing member (42) positioned at a second side of the half coils (1, 2), opposite to said first side, said first and second brazing members (41, 42) defining a gap therebetween configured to receive said stacked turns (1A, 2A)to be joined.

3. Method for winding a rotor assembly (10) according to claim 1 or 2, wherein said brazing element (4) comprises an induction coil.

4. Method for winding a rotor assembly (10) according to the claims 2 and 3, wherein said induction coil comprises a first u-shaped coil (41) and a second u-shaped coil (42).

5. Method for winding a rotor assembly (10) according to any of the preceding claims, further comprising applying a load on top of the half coils(1, 2) to be joined in correspondence of a junction area, the load being of an elastic type.

6. Method for winding a rotor assembly (10) according to any of the preceding claims, further comprising inserting metallic spacers (8) between single turns of each half coil stack (1A, 2A) to be joined prior to brazing, and replacing said metallic spacers with electrically insulating elements between single turns after brazing.

7. Method for winding a rotor assembly (10) according to any of claims from 1 to 5, further comprising inserting un-impregnated insulation elements between single turns of each half coil stack (1A, 2A) to be joined prior to brazing, and a later step of applying resin laterally to said un-impregnated insulation elements until the resin is absorbed.

8. Method for winding a rotor assembly (10) according to any of the preceding claims, further comprising utilizing a micro scale phased array sensor (6) between single turns of the half coil stack (1A, 2A) after brazing.

9. Method for winding a rotor assembly (10) according to any of the preceding claim, further comprising cooling the conductive half coils (1, 2) in correspondence of portions in proximity of a brazing area.

10. Method for winding a rotor assembly (10) according to the preceding claim, wherein the cooling is operated by means of heat exchangers (7) lying down on said conductive half coils (1, 2) to be joined.

11. Method for winding a rotor assembly (10) according to claims 9 or 10, wherein said cooling is operated by blowing compressed air towards, or within ventilation ducts of said conductive half coils (1, 2).

12. Method for winding a rotor assembly (10) according to any of the preceding claims, wherein the brazing element (4) is supplied with a heating current having an associated power input which is constant over time.

13. Brazing element (4) for brazing a pair of consecutive conductive half coils (1, 2) of a rotor assembly (10), the brazing element (4) comprising a first brazing member (41) and a second brazing member (42), wherein said first and second members (41, 42) are spaced apart such to accommodate the consecutive conductive half coils (1, 2) there between.

14. Brazing element (4) according to the preceding claim, wherein said first and second brazing members (41, 42) are induction coils.

15. Brazing element (4) according to the preceding claim, wherein said first and second brazing members (41, 42) are u-shaped induction coils.
